# DEMANDE DE BREVET EUROPEEN

(11) **EP 1 020 346 A1**
(43) Date de publication de la demande: **19.07.2000**
(21) Numéro de dépôt: 00420006.9
(22) Date de dépôt: 12.01.2000
(51) Int. Cl.: B62D 25/16

(54) **Dispositif de support pour garde-boue de véhicule routier ou agricole**

(30) Priorité: 12.01.1999 FR 9900352
(71) Demandeur: Polyrim, 07100 Saint-Marcel les Annonay (FR)
(72) Inventeur: Fichet, Jérôme, 07100 Annonay (FR)
(74) Mandataire: Bratel, Gérard

(57) **Abrégé**

Le dispositif s'applique à la fixation d'un garde-boue (1) composé d'un seul élément, ou de plusieurs éléments tels que deux éléments extrêmes (2) et un élément intermédiaire (3), assemblés entre eux de façon démontable. Le dispositif de support (7) comprend un tube-support (8) fixé au châssis (6) du véhicule concerné, et traversant un sabot de fixation (9) réalisé d'une seule pièce avec un élément (2) du garde-boue. Le tube-support (8) possède, sur une partie (8b) de sa longueur, une section non circulaire, notamment carrée. L'élément (2) de garde-boue comporte intérieurement des parties complémentaires de cette section non circulaire, associés à des moyens des serrage (13, 23), pour assurer l'immobilisation en rotation et en translation de cet élément (2) sur le tube-support (8).

## Description

La présente invention se rapporte, de façon générale, au domaine des véhicules routiers, notamment les véhicules utilitaires, ainsi que des véhicules agricoles ou analogues. Plus particulièrement, cette invention concerne un dispositif de support, pour la fixation d'un garde-boue équipant ce genre de véhicules et encore plus particulièrement, quoique non exclusivement, pour la fixation d'un garde-boue composé de deux éléments extrêmes et d'un élément intermédiaire, assemblé de façon démontable entre les deux éléments extrêmes, ces éléments étant réalisés en matière synthétique.

Une telle réalisation de garde-boue en trois éléments est décrite, par exemple, dans le brevet d'invention français n° 83 19883/2 556 301 (FICHET). Dans cette réalisation, chaque élément extrême du garde-boue est réalisé d'une seule pièce, par moulage, avec un sabot de fixation en forme de caisson, qui est traversé par un tube-support fixé lui-même au châssis du véhicule concerné.

Les tubes-supports utilisés actuellement dans cette réalisation particulière de garde-boue, comme dans d'autres réalisations analogues, sont des tubes métalliques de section ronde. La difficulté principale, rencontrée dans l'utilisation d'un tel tube-support, est de bloquer en rotation le garde-boue, ou du moins l'élément extrême de garde-boue, relativement au tube. Il en résulte que l'opération de montage du garde-boue sur le véhicule reste en général malaisée.

Dans le cas du brevet français précité n° 83 19883/2 556 301, le blocage en rotation de l'élément extrême de garde-boue sur le tube-support de section ronde est assuré au moyen de colliers de serrage, disposés sous le sabot de fixation et munis de vis de serrage accessibles depuis l'extérieur. Pour assurer un blocage en rotation efficace, un tel dispositif nécessite des colliers de serrage de dimensions et poids importants.

Une autre solution connue consiste à fixer le garde-boue au tube-support par l'intermédiaire d'une pièce métallique emboutie de grande surface, soudée sur ce tube et pourvue sur sa périphérie de plusieurs points de fixation par boulons, pour le maintien du garde-boue.

Encore une autre solution connue consiste à percer radialement le tube-support et à obtenir le blocage en rotation du garde-boue en le fixant alors directement au tube-support par au moins un boulon traversant ce tube.

Ces dernières solutions ont pour inconvénient d'interdire le réglage en translation du garde-boue sur le tube-support, afin d'aligner le garde-boue avec le plan médian des pneumatiques. Or un tel réglage latéral de la position du garde-boue doit pouvoir être effectué, car le plan médian des pneumatiques peut varier, pour un même véhicule, selon les divers types de jantes utilisés et de montes de pneumatiques.

De plus, les éléments de garde-boue étant actuellement réalisés en matière synthétique, les solutions actuelles nécessitent des inserts métalliques qui compliquent la structure des garde-boue, qui en augmentent le coût, et qui compliquent aussi leur recyclage en fin de vie, une opération de séparation des inserts métalliques étant alors nécessaire.

La présente invention vise à remédier à l'ensemble de ces inconvénients, en fournissant un dispositif de support, pour garde-boue du genre ici considéré, qui assure un blocage en rotation particulièrement efficace du garde-boue, tout en autorisant son réglage latéral, et en évitant l'utilisation d'inserts métalliques ou d'autres pièces métalliques pesantes et/ou encombrantes, tout en offrant une fixation mécaniquement résistante et en permettant un recyclage facile.

A cet effet, l'invention a essentiellement pour objet un dispositif de support pour garde-boue de véhicule routier ou agricole ou similaire, le garde-boue étant composé d'un seul élément ou de plusieurs éléments, par exemple de deux éléments extrêmes et d'un élément intermédiaire assemblés entre eux de façon démontable, et le dispositif de support comprenant un tube-support fixé au châssis du véhicule concerné, et traversant un sabot de fixation réalisé d'une seule pièce avec un élément de garde-boue, ce dispositif de support étant caractérisé en ce que le tube-support possède, sur au moins une partie de sa longueur, traversant le sabot de fixation, une section non circulaire et notamment polygonale, tandis que l'élément de garde-boue comporte intérieurement des parties complémentaires de cette section non circulaire, associées à des moyens de serrage, pour assurer l'immobilisation en rotation et en translation de l'élément de garde-boue sur le tube-support.

Ainsi, l'invention se fonde sur l'utilisation d'un tube-support de section non pas ronde, mais par exemple carrée, sur au moins une partie de sa longueur, en combinaison avec des moyens de serrage, de manière à assurer un blocage en rotation mécanique du garde-boue, lors de son montage.

Avantageusement, le tube-support possède une partie de section circulaire, fixée au véhicule concerné, prolongée par la partie de section non circulaire, par exemple de section carrée, cette partie de section carrée du tube-support pouvant être obtenue notamment par déformation à froid dans un outillage de formage approprié. Le fait de conserver une partie de section ronde permet de donner au tube-support, dans cette partie qui est la plus proche du châssis du véhicule, une cambrure servant à positionner le garde-boue à la hauteur désirée, en fonction de l'utilisation du véhicule. En effet, dans la plupart des cas, les points de fixation prévus sur le châssis du véhicule ne coïncident pas avec les positions des organes de fixation intégrés aux garde-boue.

Selon une première forme de réalisation du dispositif, objet de l'invention, les parties intérieures de l'élément de garde-boue, complémentaires de la section non circulaire du tube-support, comprennent des nervures d'appui longitudinales parallèles, formées dans la région du sabot de fixation, chaque nervure d'appui possédant un bord à conformation concave, notamment à angle rentrant, complémentaire d'une portion du contour de la section non circulaire, notamment polygonale, du tube-support.

Quant aux moyens de serrage, ceux-ci comprennent, dans un mode de réalisation, une plaque profilée formant un demi-collier, dont une partie possède un profil complémentaire d'une portion du contour de la section non circulaire, notamment polygonale, du tube-support, des moyens à vis étant prévus pour le serrage de la plaque profilée sur la partie de section non circulaire du tube-support. Plus particulièrement, cette plaque profilée formant un demi-collier peut posséder un bord engagé dans une partie de profil en crochet, formée à l'intérieur du sabot de fixation, tandis que vers son bord opposé au précédent, ladite plaque profilée est percée d'au moins un trou recevant une vis de serrage qui traverse aussi le sabot de fixation, la tête de la vis ou chaque vis de serrage étant ainsi accessible depuis l'extérieur.

Selon une autre forme de réalisation du dispositif, objet de l'invention, les parties intérieures de l'élément de garde-boue, complémentaires de la section non-circulaire du tube-support, sont constituées par au moins un collier rigide avec ouverture de forme polygonale, apte à être traversée par le tube-support, le ou chaque collier étant monté à l'intérieur de l'élément de garde-boue et solidarisé avec cet élément, et une bride de serrage pivotante étant associée au ou à chaque collier, la bride étant elle-même pourvue de moyens de serrage à vis pour son appui et son serrage contre le tube-support.

Selon encore une autre forme de réalisation du dispositif, objet de l'invention, les parties intérieures de l'élément de garde-boue, complémentaires de la section non-circulaire du tube-support, sont constituées par un fourreau transversal de section non-circulaire correspondante, réalisé d'un seul tenant avec l'élément de garde-boue et prévu pour l'introduction du tube-support, avec un jeu de montage, des moyens de serrage du genre brides étant prévus pour s'appliquer extérieurement contre ledit fourreau et assurer le rattrapage du jeu de montage.

Dans l'ensemble, l'on obtient ainsi un dispositif de support pour garde-boue qui comporte des avantages nombreux et appréciables :
- En premier lieu, ce dispositif de support assure positivement le blocage en rotation du garde-boue, ce qui facilite grandement l'opération de montage du garde-boue sur son tube-support, en supprimant tout risque d'erreur de positionnement, ou d'orientation de l'élément de garde-boue par rapport à l'axe du tube.
- Le dispositif conserve la possibilité de réglage latéral du garde-boue, en assurant un guidage en translation dans la direction longitudinale du tube-support, pour adapter la position du garde-boue aux divers types existants de jantes, notamment les jantes en alliage d'aluminium.
- Lorsqu'on utilise une pièce profilée formant un demi-collier, étant de relativement grande étendue, assure une répartition de l'effort de blocage du garde-boue sur une surface importante et permet l'utilisation de vis de serrage de plus petit diamètre que dans les solutions antérieures, en évitant ainsi les risques de rupture ou de fluage de la matière plastique dus à des contraintes trop élevées dans les zones de fixation.
- Lorsqu'elles sont réalisées d'une seule pièce, par moulage, avec l'élément de garde-boue, les parties de cet élément complémentaires de la section non circulaire du tube-support sont obtenues sans nécessité d'inserts notamment métalliques, ce qui simplifie la fabrication du garde-boue, d'où un gain économique, et facilite aussi son recyclage en fin de vie (toute opération de séparation des inserts métalliques étant supprimée).
- La pièce profilée formant un demi-collier étant en métal ou en matière synthétique rigide de faible poids, est elle aussi économique et facile à recycler.
- Les colliers ou moyens de serrage similaires sont situés du côté intérieur du garde-boue, et se trouvent ainsi protégés, ceci contribuant aussi à l'esthétique de l'ensemble.
- Dans la mesure où le tube-support traverse un sabot de fixation, appartenant à l'élément de garde-boue, les efforts de fixation sont directement transmis et se trouvent répartis sur une surface suffisamment importante, ce qui évite les concentrations d'efforts excessives, risquant de provoquer une rupture de la matière plastique constituant l'élément de garde-boue.
- Enfin, en changeant simplement les pièces formant un demicollier ou un collier, et sans aucune modification de l'élément de garde-boue, il est possible de fixer le même garde-boue, avec blocage en rotation, sur des tubes-supports de différentes sections.

De toute façon, l'invention sera mieux comprise à l'aide de la description qui suit, en référence au dessin schématique annexé représentant, à titre d'exemples, quelques formes d'exécution de ce dispositif de support pour garde-boue de véhicule routier ou agricole :
Figure 1 est une vue partielle, en perspective, d'un garde-boue en trois éléments monté au moyen d'un dispositif de support de l'état de la technique;
Figure 2 est une vue partielle, en perspective, d'un garde-boue en trois éléments monté au moyen d'un dispositif de support selon l'invention ;
Figure 3 est une vue en perspective, éclatée du dispositif de support selon l' invention ;
Figure 4 est une vue en perspective à échelle agrandie, de certains éléments de ce dispositif de support, cette vue illustrant aussi une variante ;
Figure 5 est une vue en coupe longitudinale d'un élément extrême de garde-boue, prévu pour être monté au moyen du dispositif de support, objet de l'invention ;
Figure 6 représente, à échelle agrandie, un détail de la figure 5, avec indication du tube-support ;
Figure 7 est une vue similaire à figure 6, illustrant une autre variante du dispositif selon l'invention ;
Figure 8 est une vue similaire aux deux précédentes, illustrant encore une autre variante de l'invention ;
Figure 9 est une vue en perspective, illustrant l'application de l'invention à un garde-boue en un seul élément.

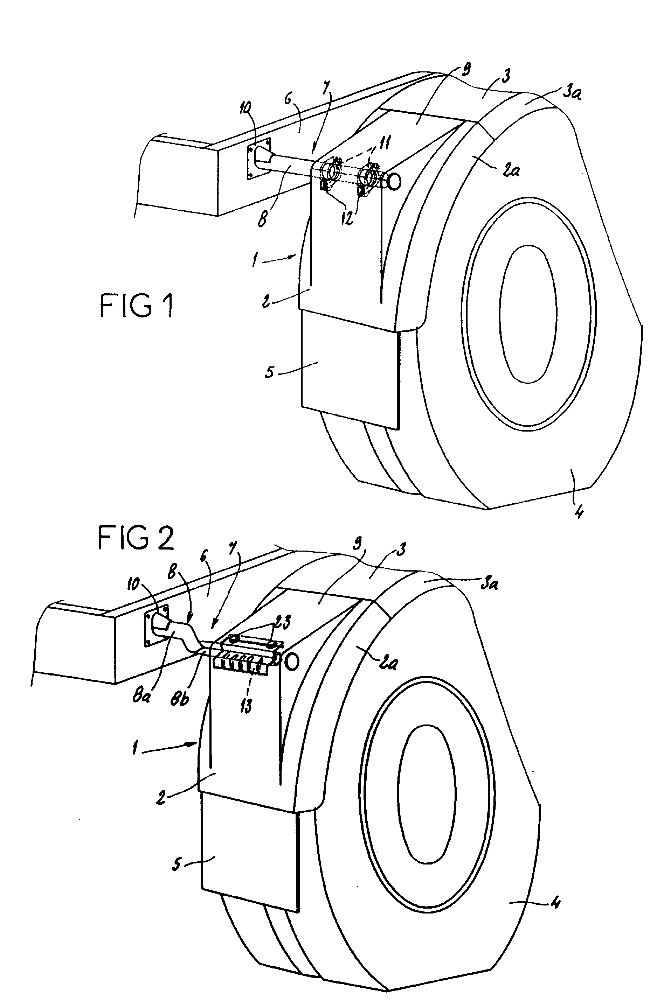

Le garde-boue représenté aux figures 1 et 2, désigné dans son ensemble par le repère 1, se compose de deux éléments extrêmes 2 symétriques (dont un seul est ici visible), et d'un élément intermédiaire 3 qui réunit les deux éléments extrêmes 2, les trois éléments étant réalisés en matière synthétique. L'ensemble composé de ces trois éléments possède une forme traditionnelle de garde-boue, apte à envelopper la partie supérieure d'une roue 4 à pneumatiques de véhicule routier utilitaire. Les éléments extrêmes 2 et intermédiaire 3 du garde-boue 1 sont pourvus de rebords latéraux, respectivement 2a et 3a, aptes à arrêter les projections de boue, pierres et autres. Ce garde-boue 1 peut être complété par une bavette souple 5 qui prolonge vers le bas l'un des éléments extrêmes 2.

Le montage du garde-boue 1 sur le châssis 6 du véhicule routier concerné est réalisé au moyen de deux dispositifs de support, dont l'un seulement, désigné dans son ensemble par le repère 7, est représenté au dessin. Chaque dispositif de support 7 comprend principalement un tube-support 8, de direction générale transversale. Le tube-support 8 traverse une face latérale d'un sabot de fixation 9, réalisé d'une seule pièce avec un élément extrême 2 du garde-boue 1, et il comporte, à une extrémité, une embase 10 par l'intermédiaire de laquelle il est fixé à un longeron du châssis 6.

La figure 1 montre un dispositif de support 7 de l'état de la technique, dans lequel le tube-support 8 est un tube métallique de section ronde, sur toute se longueur. L'élément extrême 2 du garde-boue 1 comporte, dans la région du sabot de fixation 9, deux colliers de serrage intérieurs 11 constitués chacun d'un demi-collier métallique fixe, conformé en insert ou rapporté, et d'un demi-collier mobile, le tout étant muni d'une vis de serrage 12 accessible depuis l'extérieur. Comme on le comprend aisément, cette solution connue ne procure pas un blocage en rotation efficace de l'élément extrême 2 du garde-boue 1 par rapport au tube-support 8.

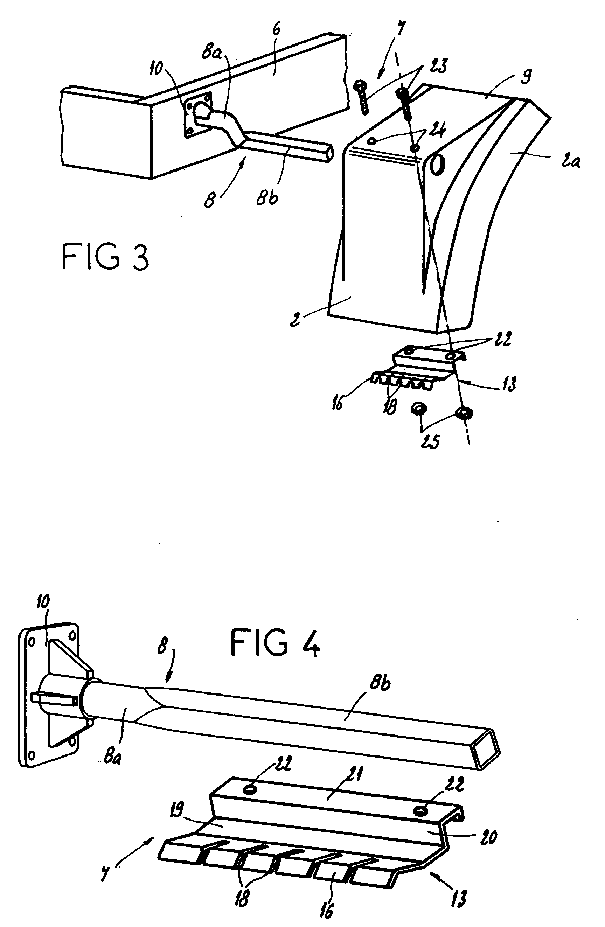

Les figures 2 et 3 illustrent, dans une vue d'ensemble, le dispositif de support 7, objet de l'invention. Le tube-support 8 possède ici :
- une section ronde dans une première partie de sa longueur, indiquée en 8a, partant de l'extrémité du tube 8 fixée au châssis 6 par l'intermédiaire de 'embase 10 ;
- une section carrée dans une seconde partie de sa longueur, indiquée en 8b, qui prolonge la première partie 8 et s'étend jusqu'à l'autre extrémité du tube 8, en traversant le sabot de fixation 9.

La partie 8a de section ronde du tube-support 8, proche du châssis 6 du véhicule, peut être plus ou moins cambrée comme illustré aux figures 2 et 3, pour positionner le garde-boue 1 à la hauteur désirée, en fonction de l'utilisation du véhicule. Dans une variante, illustrée sur la figure 4, le tube-support 8 peut aussi rester entièrement rectiligne, se partie 8a de section ronde n'étant pas cambrée.

L'autre partie 8b du tube-support 8, de section carrée, coopère avec une pièce complémentaire profilée 13, en métal ou en matière plastique rigide, formant un demi-collier, qui est liée à l'élément extrême 2 du garde-boue 1. L'élément extrême 2 du garde-boue 1 se trouve ainsi bloqué en rotation sur le tube-support 8.

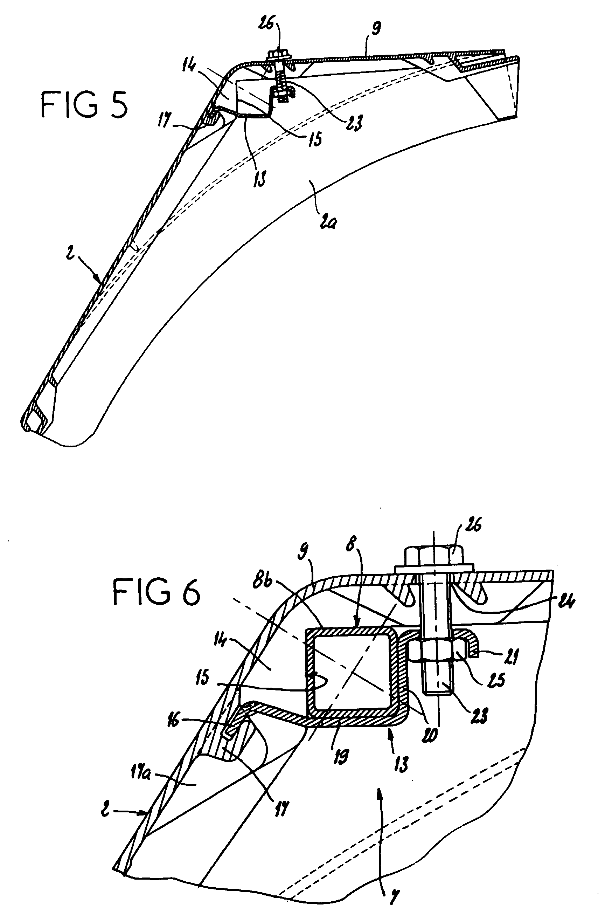

Comme le montrent les figures 5 et 6, l'élément extrême 2 du garde-boue 1 comporte intérieurement, dans le région de son sabot de fixation 9, plusieurs nervures d'appui longitudinales parallèles 14, dont le bord 15 forme un angle rentrant de 90°.

La pièce profilée 13, de faible épaisseur, possède un bord plié 16, qui est engagé dans une partie de profil en crochet 17, formée à l'intérieur du sabot de fixation 9 et soutenue par des rainures de renfort 17a. Le bord 16 comporte une série d'encoches 18, ménagées en correspondance avec les nervures 14 et 17a.

Dans sa partie intermédiaire, la pièce profilée 13 possède deux faces consécutives 19 et 20, qui forment un angle de 90° situé en regard de l'angle rentrant de 90° formé par le bord 15 des nervures 14.

Vers son autre bord 21, éloigné du bord plié 16, la pièce profilée 13 est percée de deux trous 22. Deux vis de serrage 23 sont introduites au travers de trous 24 du sabot de fixation 9, et au travers des trous 22 de la pièce profilée 13. Chaque vis de serrage 23 reçoit un écrou 25, prenant place sous la pièce profilée 13.

L'élément extrême 2 du garde-boue 1 est engagé, par son sabot de fixation 9, sur la partie 8b de section carrée du tube-support 8, de telle sorte que cette partie 8b prend place entre les nervures d'appui 14 et la pièce profilée 13, dans le passage de section sensiblement carrée délimitée par l'angle rentrant du bord 15 des nervures 14 et par les deux faces 19 et 20 de la pièce 13. Le serrage des vis 23, par leurs têtes 26 accessibles depuis l'extérieur, rapproche la pièce profilée 13 de la paroi du sabot de fixation 9, en la faisant pivoter autour de la partie en crochet 17. Ce serrage bloque la partie 8b de section carrée du tube-support 8 entre les nervures d'appui 14 et la pièce profilée 13, et bloque ainsi tout l'élément extrême 2 du garde-boue 1 sur le tube-support 8, aussi bien en rotation qu'en translation.

Un réglage en translation (dans la direction longitudinale du tube-support 8) est possible, pour l'élément 2 du garde-boue 1, afin de pouvoir s'adapter à la jante et aux pneumatiques de la roue 4.

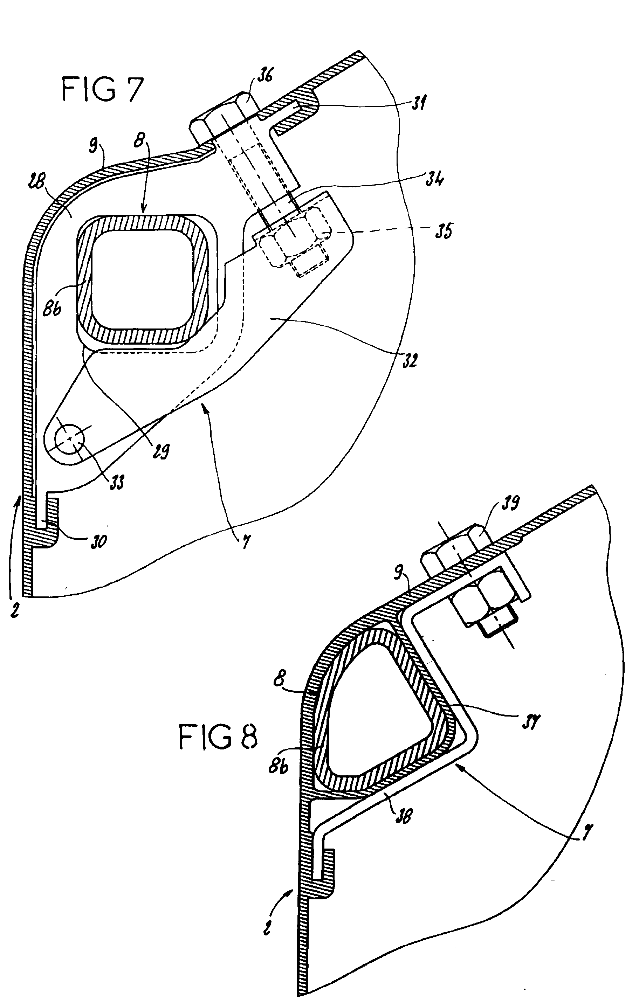

La figure 7 illustre une variante du dispositif de support 7, objet de l'invention, encore destinée au montage d'un élément extrême 2 de garde-boue. Le dispositif 7 comprend, ici aussi, un tube-support 8 avec partie 8b de section carrée, traversant le sabot de fixation 9 formé sur l'élément 2 de garde-boue. La partie 8b du tube-support 8 traverse un collier métallique rigide 28 avec ouverture 29 de forme polygonale, plus particulièrement carrée. Le collier métallique 28 est monté à l'intérieur de l'élément 2 de garde-boue, sous le sabot 9, et solidarisé avec l'élément 2 par des liaisons symbolisées en 30 et 31. A ce collier fixe 28 est associée une bride de serrage 32, elle aussi métallique, montée pivotante autour d'un axe 33 solidaire du collier 28. La bride 32 est actionnée, depuis l'extérieur, par une vis 34 avec écrou 35. Le serrage de la vis 34 par sa tête 36, faisant pivoter la bride 32 autour de l'axe 33, provoque l'appui et le serrage de cette bride 32 contre la partie de tube 8b, notamment dans la région de l'une des arêtes de cette partie 8b, de manière à assurer l'immobilisation de l'élément 2 de garde-boue sur le tube-support 8. Cette variante réalise une liaison particulièrement résistante, du point de vue mécanique, entre l'élément 2 de garde-boue et le tube-support 8.

La figure 8 illustre encore une autre variante, dans laquelle le tube-support 8 possède une partie 8b de section polygonale avec un côté curviligne. L'élément 2 de garde-boue présente intérieurement, dans la région de son sabot 9, un fourreau transversal 37 en matière synthétique, venant de moulage avec l'élément 2. La section intérieure du fourreau 37 correspond, sensiblement, à la section extérieure de la partie 8b du tube-support 8. Cette partie 8b du tube-support 8 est introduite, avec un léger jeu, au travers du fourreau 37. Des brides métalliques 38 sont appliquées et serrées, au moyen de vis 39, contre la face extérieure du fourreau 37, pour assurer le rattrapage du jeu de montage nécessaire à l'introduction du tube-support 8 dans le fourreau 37, et pour assurer ainsi le blocage de l'élément 2 de garde-boue sur le tube-support 8.

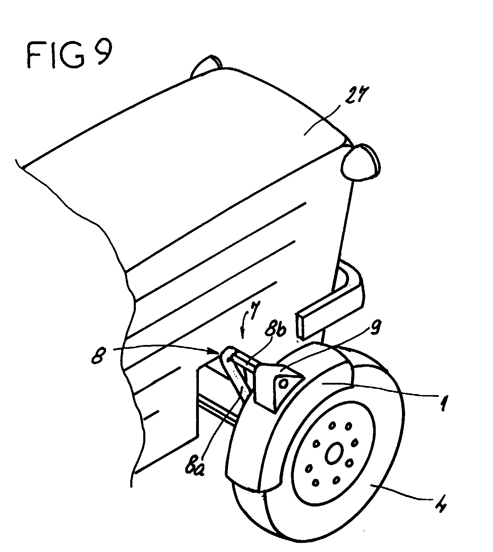

La figure 9 illustre l'application du dispositif de support 7, objet de l'invention, à un garde-boue 1 réalisé en un seul élément, et équipant un véhicule agricole 27. Plus particulièrement, ce garde-boue 1 enveloppe partiellement une roue avant directrice 4 du véhicule 27. Le dispositif de support 7 comprend ici encore un tube-support 8, qui possède une partie 8b de section carrée traversant un sabot de fixation 9, formé sur l'élément unique du garde-boue 1. Les moyens d'immobilisation en rotation et en translation du garde-boue 1 sur le tube-support 8 peuvent être réalisés conformément à la description précédente, et ne sont pas détaillés ici. Le garde-boue 1 devant suivre l'orientation de la roue directrice 4, la partie 8a de section ronde du tube-support 8 n'est pas fixée ici directement au châssis du véhicule, mais elle est convenablement cambrée pour être fixée sur la fusée (non représentée) qui supporte la roue 4.

Comme il va de soi, l'invention ne se limite pas aux seules formes d'exécution de ce dispositif de support pour garde-boue qui ont été décrites ci-dessus, à titre d'exemples ; elle en embrasse, au contraire, toutes les variantes de réalisation et d'application respectant le même principe. En particulier, l'on ne s'éloignerait pas du cadre de l'invention :
- en adaptant la forme et les dimensions de la pièce profilée formant demi-collier, en fonction de la grosseur du tube-support utilisé ;
- en utilisant tout système de collier, bride ou analogue, pour le blocage de l'élément de garde-boue sur le tube-support ;
- en prévoyant un tube-support de section non pas carrée, mais de toute autre forme polygonale avec faces planes et arêtes, apte à assurer un blocage en rotation de l'élément de garde-boue monté sur ce tube ;
- en modifiant le nombre des vis de serrage, ou d'autres détails constructifs ;
- en fixant le tube-support sur toute partie de véhicule ;
- en appliquant le dispositif à des garde-boue composés d'un nombre quelconque d'éléments ;
- en destinant ce dispositif de support à des garde-boue pour tous genres de véhicules, non seulement routiers et agricoles, mais aussi d'autres véhicules industriels et analogues, tels que les engins de travaux publics.

## Revendications

1. Dispositif de support pour garde-boue de véhicule routier ou agricole ou analogue, le garde-boue (1) étant composé d'un seul élément ou de plusieurs éléments, par exemple de deux éléments extrêmes (2) et d'un élément intermédiaire (3) assemblés entre eux de façon démontable, et le dispositif de support (7) comprenant un tube-support (8) fixé au châssis (6) du véhicule concerné, et traversant un sabot de fixation (9) réalisé d'une seule pièce avec un élément (2) de garde-boue (1), caractérisé en ce que le tube-support (8) possède, sur au moins une partie (8b) de sa longueur, traversant le sabot de fixation (9), une section non circulaire et notamment polygonale, tandis que l'élément (2) de garde-boue (1) comporte intérieurement des parties (14, 15 ; 28, 29 ; 37) complémentaires de cette section non circulaire, associées à des moyens de serrage (13, 23 ; 32 ; 38, 39), pour assurer l'immobilisation en rotation et en translation de l'élément (2) de garde-boue sur le tube-support (8).

2. Dispositif de support pour garde-boue selon la revendication 1, caractérisé en ce que la partie de section non-circulaire du tube-support (8) est une partie de section carrée (8b).

3. Dispositif de support pour garde-boue selon la revendication 1 ou 2, caractérisé en ce que le tube-support (8) possède une partie (8a) de section circulaire, fixée (en 10) au véhicule concerné, prolongée par la partie (8b) de section non circulaire.

4. Dispositif de support pour garde-boue selon la revendication 3, caractérisé en ce que la partie (8a) de section circulaire du tube-support (8) présente une cambrure.

5. Dispositif de support pour garde-boue selon l'une quelconque des revendications 1 à 4, caractérisé en ce que les parties intérieures de l'élément (2) de garde-boue (1), complémentaires de la section non circulaire du tube-support (8), comprennent des nervures d'appui longitudinales parallèles (14), formées dans la région du sabot de fixation (9), chaque nervure d'appui (14) possédant un bord (15) à conformation concave, notamment à angle rentrant, complémentaire d'une portion du contour de la section non circulaire, notamment polygonale, du tube-support (8).

6. Dispositif de support pour garde-boue selon l'une quelconque des revendications 1 à 5, caractérisé en ce que les moyens de serrage comprennent une plaque profilée (13), formant un demi-collier, dont une partie (19,20) possède un profil complémentaire d'une portion du contour de la section non circulaire, notamment polygonale, du tube-support (8), des moyens à vis (23, 25, 26) étant prévus pour le serrage de la plaque profilée (13) sur la partie (8b) de section non circulaire du tube-support (8).

7. Dispositif de support pour garde-boue selon l'ensemble des revendications 2, 5 et 6, caractérisé en ce que le bord (15) des nervures d'appui (14) forme un angle rentrant de 90°, et en ce que la plaque profilée (13) possède deux faces consécutives (19,20) qui forment un angle de 90° situé en regard de l'angle rentrant précité, de manière à délimiter un passage de section sensiblement carrée, dans lequel est engageable la partie de section carrée (8b) du tube-support (8).

8. Dispositif de support pour garde-boue selon la revendication 6 ou 7, caractérisé en ce que la plaque profilée (13), formant un demi-collier, possède un bord (16) engagé dans une partie de profil en crochet (17), formée à l'intérieur du sabot de fixation (9), tandis que vers son bord (21) opposé au précédent, ladite plaque profilée (13) est percée d'au moins un trou (22) recevant une vis de serrage (23) qui traverse aussi (en 24) le sabot de fixation (9), la tête (26) de la ou chaque vis de serrage (23) étant ainsi accessible depuis l'extérieur.

9. Dispositif de support pour garde-boue selon l'une quelconque des revendications 1 à 4, caractérisé en ce que les parties intérieures de l'élément (2) de garde-boue (1), complémentaires de la section non circulaire du tube-support (8), sont constituées par au moins un collier rigide (28) avec ouverture (29) de forme polygonale, apte à être traversée par le tube-support (8), le ou chaque collier (38) étant monté à l'intérieur de l'élément (2) de garde-boue (1) et solidarisé (en 30, 31) avec cet élément (2), et une bride de serrage pivotante (32) étant associée au ou à chaque collier (28), la bride (32) étant elle-même pourvue de moyens de serrage à vis (34, 35, 36) pour son appui et son serrage contre le tube-support (8).

10. Dispositif de support pour garde-boue selon l'une quelconque des revendications 1 à 4, caractérisé en ce que les parties intérieures de l'élément (2) de garde-boue (1), complémentaires de la section non-circulaire du tube-support (8), sont constituées par un fourreau transversal (37) de section non-circulaire correspondante, réalisé d'un seul tenant avec l'élément (2) de garde-boue (1) et prévu pour l'introduction du tube-support (8) avec un jeu de montage, des moyens de serrage du genre brides (38, 39) étant prévus pour s'appliquer extérieurement contre ledit fourreau (37) et assurer le rattrapage du jeu de montage.
